# EUROPÄISCHE PATENTSCHRIFT

(11) **EP 0 680 851 B1**
(45) Veröffentlichungstag und Bekanntmachung des Hinweises auf die Patenterteilung: **09.07.1997**
(21) Anmeldenummer: 95106359.3
(22) Anmeldetag: 27.04.1995
(51) Int. Cl.: B60R 21/20

(54) **Gassack-Modul**
Air-bag module
Module pour coussin à air

(30) Priorität: 02.05.1994 DE 4415374
(43) Veröffentlichungstag der Anmeldung: 08.11.1995
(73) Patentinhaber: TRW Occupant Restraint Systems GmbH, 73553 Alfdorf (DE)
(72) Erfinder: Acker, Dominique, D-73553 Alfdorf (DE); Kuhn, Adolf M., D-73642 Welzheim (DE)
(74) Vertreter: Degwert, Hartmut, Dipl.-Phys.

(56) Entgegenhaltungen:
- EP-A- 0 404 302
- US-A- 5 284 358

## Beschreibung

Die Erfindung betrifft ein Gassack-Modul eines Insassen-Rückhaltesystems für Fahrzeuge, mit einem auf einer Seite einer länglichen Gehäusewandung verstaubaren Gassack und einem auf der gegenüberliegenden Seite dieser Gehäusewandung anbringbaren Gasgenerator zum Aufblasen des Gassacks, wobei der Gassack entlang einer eine Einblasöffnung umgebenden Berandung mit einem Wulst versehen ist.

Ein Gassack-Modul dieser Art ist aus der US-A-5 284 358 bekannt. Es umfaßt außerdem noch ein separates Bauteil, das in seiner Form an die Gehäusewandung angepaßt ist und zur Befestigung des Gassacks und des Gasgenerators an der Gehäusewandung dient. Es weist zwei Flansche auf, die durch Schlitze in der Gehäusewandung gesteckt werden und an denen der Gasgenerator mittels Schrauben befestigt wird. Dabei wird der am Gassack ausgebildete Wulst zwischen der Gehäusewandung und dem separaten Bauteil festgehalten und auf diese Weise die Verbindung zwischen dem Gassack und der Gehäusewandung hergestellt.

Die Herstellung der Verbindungen zwischen dem Gassack und der Gehäusewandung einerseits und dem Gasgenerator und der Gehäusewandung andererseits ist relativ kritisch und in der Regel äußerst aufwendig. Die Verbindungen müssen hohen mechanischen Belastungen standhalten und praktisch gasdicht sein. Problematisch ist auch die allgemein erforderliche hohe Anzahl von Verbindungen, die üblicherweise durch Schrauben, Nieten oder dergleichen verwirklicht sind. Derartige Verbindungen sind nicht nur aufwendig, sie stellen auch stets mögliche Fehlerquellen dar. Schließlich müssen die Bauteile eines jeweiligen Rückhaltesystems unter Beachtung der Verhältnisse im jeweiligen Fahrzeug optimal aufeinander abgestimmt sein, weshalb eine jeweilige Baugruppe bisher meist speziell für den besonderen Einsatzfall konzipiert war, wodurch eine rationelle Fertigung ausgeschlossen war.

Der Erfindung liegt die Aufgabe zugrunde, ein kompaktes, auch höheren Ansprüchen hinsichtlich der mechanischen Belastbarkeit und der Gasdichtigkeit gerecht werdendes Gassack-Modul der eingangs genannten Art zu schaffen, das einfach und kostengünstig herstellbar und montierbar ist, wobei insbesondere auch die kritischen Verbindungen zwischen dem Gassack und der Gehäusewandung einerseits und dem Gasgenerator und der Gehäusewandung andererseits unter Gewährleistung der geforderten Zuverlässigkeit vereinfacht sein sollen.

Diese Aufgabe wird nach der Erfindung dadurch gelöst, daß die Gehäusewandung einen von dem Wulst des Gassacks hintergriffenen Rand aufweist und daß an der Gehäusewandung eine elastische Klemmaufnahme für den Gasgenerator vorgesehen ist, in die dieser unter Herstellung einer dichten Verbindung mit dem Innern des Gassacks einschnappbar ist.

Demnach wird der Gassack über den Wulst an der Gehäusewandung zurückgehalten. Gesonderte Befestigungsmittel wie beispielsweise Schrauben, Nieten oder dergleichen sind nicht mehr erforderlich. Zur Montage des Gassacks an der Gehäusewandung genügt es, diese mit dem betreffenden Rand durch die Einblasöffnung hindurch in den Gassack einzuführen und nach einem entsprechenden Verschwenken bezüglich dieser Einblasöffnung wieder nach außen zu ziehen, bis der Wulst in den Rand der Gehäusewandung einschnappt. Sobald im Innern des Gassacks ein Druck aufgebaut wird, wird der Wulst gegen diesen Rand gezogen, so daß eine zuverlässige Abdichtung nach außen sichergestellt ist. Ebenso einfach ist der Gasgenerator an der Gehäusewandung montierbar. Dieser ist lediglich in die elastische Klemmaufnahme einzustecken, durch die er dann in einer Position gehalten wird, in der gleichzeitig auch eine dichte Verbindung mit dem Innern des Gassacks sichergestellt ist. Aufgrund dieser Schnappverbindung sind auch zur Befestigung des Gasgenerators an der Gehäusewandung keine getrennten zusätzlichen Verbindungsmittel mehr erforderlich. Entsprechend einfach ist auch die Demontage des Gassack-Moduls. Dieser weist zudem ein Minimum an Einzelteilen auf. Durch seine kompakte Bauweise ist nicht nur der Einbau im Fahrzeug, sondern auch die Lagerhaltung vereinfacht, wobei darüberhinaus die Möglichkeit besteht, den Gasgenerator getrennt von einer vormontierten, lediglich den Gassack und die Gehäusewandung enthaltenden Einheit zu lagern, da dieser Gasgenerator aufgrund der einfachen Schnappverbindung problemlos auch erst bei der Endmontage an der Gehäusewandung angebracht werden kann. Die Gefahr einer unbeabsichtigten Zündung während der Lagerung oder während eines Transports kann dadurch auf ein Minimum herabgesetzt werden. Zudem ergeben sich durch die Festlegung der Einblasöffnung durch den vom Wulst hintergriffenen Rand der Gehäusewandung relativ große Radien, durch die die Einblasöffnung des Gassacks im Falle einer Auslösung des Gasgenerators aufgrund einer Kollision entlastet wird. Schließlich bringt die kompakte Bauweise des Gassack-Moduls auch ein entsprechend verringertes Gewicht mit sich.

Der Wulst ist vorzugsweise durch eine schlauchförmige Berandung der Einblasöffnung des Gassacks und einen in diese schlauchförmige Berandung eingesetzten geschlossenen Verstärkungsring gebildet. Dieser kann auf einfache Weise in den Saum der Berandung der Einblasöffnung eingenäht sein.

Die elastische Klemmaufnahme ist zweckmäßigerweise einstückig mit der Gehäusewandung ausgebildet, die insgesamt vorzugsweise aus Kunststoff besteht, so daß beispielsweise auch eine gewisse Flexibilität der Gehäusewandung bezüglich der Befestigung im Fahrzeug, des einströmenden Gases und der Befestigung weiterer Teile wie einer Abdeckung oder dergleichen erzielbar ist.

Einer bleibenden Verformung der Gehäusewandung nach einer Auslösung des Gasgenerators kann vorteilhafterweise dadurch entgegengewirkt werden, daß zumindest nach einer Montage des Gassacks an der Gehäusewandung eine ovale Form der Einblasöffnung festgelegt ist. Durch die entsprechende Verteilung der aufzunehmenden Kräfte ergibt sich eine Art Fischmaul-Effekt, durch den sichergestellt ist, daß die Einblasöffnung anschließend wieder ihre ursprüngliche Form annimmt.

Zur Herstellung einer nach außen dichten Gasverbindung zwischen dem Gasgenerator und dem Innern des Gassacks in dem Fall, daß der Gasgenerator lediglich an einem beispielsweise flaschenhalsförmigen Ende mit Gasaustrittsöffnungen versehen ist, besitzt die Gehäusewandung vorzugsweise eine zur Seite des Gassacks hin offene Gasanschlußkammer, in die das die Gasaustrittsöffnungen aufweisende Ende des montierten Gasgenerators eingesetzt ist.

Um eine möglichst gleichmäßige Beaufschlagung des Gassacks mit Druckgas sicherzustellen, mündet diese Gasanschlußkammer vorteilhafterweise in wenigstens einen zur Seite des Gassacks hin offenen Gasführungskanal der Gehäusewandung, der im Bereich des vom Wulst hintergriffenen äußeren Randes der Gehäusewandung angeordnet ist und einen zumindest im wesentlichen der Form des Gasgenerators angepaßten Hauptabschnitt dieser Gehäusewandung wenigstens teilweise umgibt. Trotz der zumindest teilweisen Anlage des Gasgenerators an dem Hauptabschnitt der Gehäusewandung kann die Einblasöffnung somit vorzugsweise im gesamten diesen Hauptabschnitt umgebenden Bereich beaufschlagt werden. Damit ist ein gleichmäßiges Aufblasen des Gassacks gewährleistet.

In den Unteransprüchen sind weitere vorteilhafte Ausführungen der Erfindung angegeben.

Weitere Vorteile und Merkmale der Erfindung ergeben sich aus der folgenden Beschreibung bevorzugter Ausführungsformen und aus der Zeichnung, auf die Bezug genommen wird. In der Zeichnung zeigen:
- Fig. 1: eine schematische, teilweise geschnittene Seitenansicht eines Gassackmoduls vor einer Montage des Gasgenerators an der Gehäusewandung,
- Fig. 2: eine schematische vergrößerte Schnittdarstellung des Randbereichs der Gehäusewandung des in Fig. 1 gezeigten Gassack-Moduls,
- Fig. 3a, 3b: schematische Schnittdarstellungen unterschiedlich ausgebildeter Wülste,
- Fig. 4: eine schematische Querschnittsdarstellung des in Fig. 1 gezeigten Gassack-Moduls ohne Gassack,
- Fig. 5: eine schematische Längsschnittdarstellung des in Fig. 1 gezeigten Gassack-Moduls mit in die Klemmaufnahme der Gehäusewandung eingesetztem Gasgenerator,
- Fig. 6: eine Draufsicht des in Fig. 5 gezeigten Gassack -Moduls, wobei jedoch der Gassack weggelassen ist,
- Fig. 7: eine schematische, teilweise geschnittene Seitenansicht einer weiteren Ausführungsform eines Gassack-Moduls,
- Fig. 8: eine schematische Querschnittsdarstellung des in Fig. 7 gezeigten Gassack-Moduls nach der Linie I-I,
- Fig. 9: eine schematische, teilweise geschnittene Draufsicht einer weiteren Ausführungsform eines Gassack-Moduls,
- Fig. 10: eine schematische, teilweise geschnittene Seitenansicht des in Fig. 9 gezeigten Gassack -Moduls,
- Fig. 11: eine schematische Querschnittsansicht des in Fig. 10 gezeigten Gassack-Moduls,
- Fig. 12: eine schematische Querschnitts-Teilansicht des in den Figuren 9 bis 11 gezeigten Gassack-Moduls mit zusätzlichem Gassack-Führungsrahmen und
- Fig. 13: eine Fig. 12 vergleichbare Darstellung des in den Figuren 9 bis 11 gezeigten Gassack-Moduls mit zusätzlicher Abdeckung.

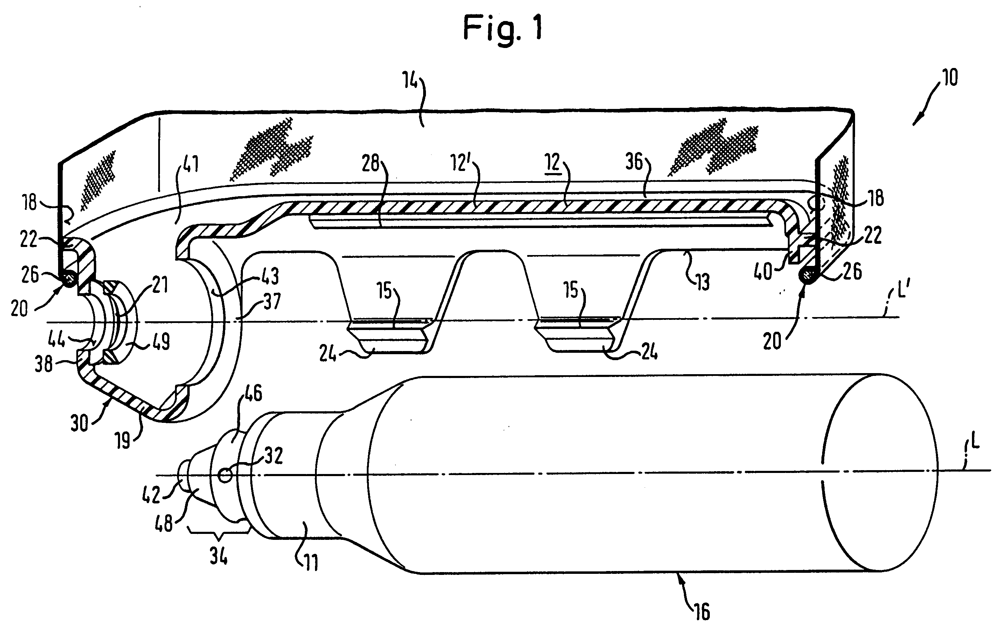

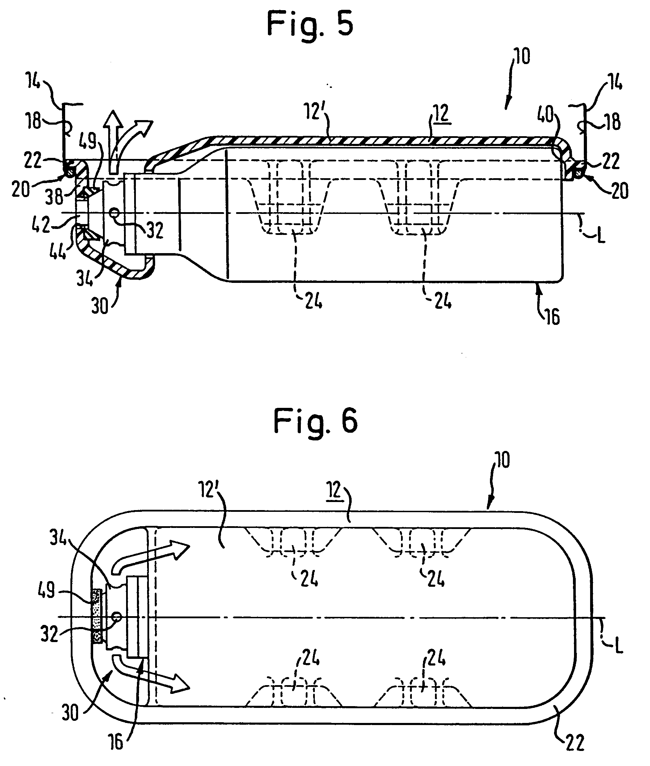

Nach den Figuren 1 bis 6 enthält ein Gassack-Modul 10 eines Insassen-Rückhaltesystems für Fahrzeuge einen auf einer Seite einer Gehäusewandung 12 verstaubaren Gassack 14 und einen auf der gegenüberliegenden Seite der Gehäusewandung 12 anbringbaren Gasgenerator 16 zum Aufblasen des Gassacks. Die den Gassack 14 sowie den Gasgenerator 16 aufnehmende Gehäusewandung 12 ist Teil dieses Gassack-Moduls 10. Ein solches Gassack-Modul 10 ist beispielsweise i.V.m. einem H.G.I.-Gasgenerator verwendbar.

Der Gassack 14 besitzt eine Einblasöffnung 18, durch die im Falle einer fahrzeugsensitiven Auslösung des Gasgenerators 16 von diesem abgegebenes Gas ins Innere des Gassacks 14 einströmen kann, wodurch dieser zur Erzielung der gewünschten Rückhaltefunktion aufgeblasen wird. Im Bereitschaftszustand ist der Gassack 14 auf der betreffenden Seite der Gehäusewandung 12 so zusammengefaltet, daß er durch das einströmende Gas in das Innere des Fahrzeugs aufgefaltet wird, während er im Bereich seiner die Einblasöffnung 18 umgebenden Berandung an der Gehäusewandung 12 zurückgehalten wird.

Hierzu ist der Gassack 14 entlang der die Einblasöffnung 18 umgebenden Berandung mit einem radial nach innen gerichteten Wulst 20 versehen. Dieser Wulst 20 hintergreift im montierten Zustand einen flanschartig nach außen weisenden Rand 22 der Gehäusewandung 12. Zwischen diesem Rand 22 und einer auswärts abragenden Rippe 23 ist ein umlaufender Sitz für den Wulst 20 gebildet. Nach der Montage des Gassacks 14 an der Gehäusewandung 12 ist eine längliche Form der Einblasöffnung 18 mit gerundeten Ecken festgelegt.

Die vorzugsweise aus Kunststoff bestehende Gehäusewandung 12 ist beim vorliegenden Ausführungsbeispiel einstückig mit vier elastischen Klemmarmen 24 ausgebildet, die den Gasgenerator 16 auf einander gegenüberliegenden Längsseiten teilweise umgreifen. Hierbei sind auf jeder Längsseite der Gehäusewandung 12 jeweils zwei solche elastische Klemmarme 24 vorgesehen. Diese bilden demnach eine Klemmaufnahme, durch die der Gasgenerator 16 federnd seitlich gegen die Gehäusewandung 12 gehalten wird. Sobald der Gasgenerator 16 in die Klemmaufnahme eingeschnappt ist, ist gleichzeitig auch die dichte Verbindung mit dem Innern des Gassacks 14 hergestellt, wie dies weiter unten näher beschrieben ist.

Der Gasgenerator 16 ist im wesentlichen zylindrisch und mit einer flaschenhalsartigen Verlängerung 11 versehen, an die sich ein über den Umfang verteilte Gasaustrittsöffnungen 32 aufweisender Endabschnitt 46 anschließt, der über einen kegelstumpfartigen Zwischenbereich 48 in einen zur Längsachse L konzentrischen zylindrischen Ansatz 42 übergeht.

Die Gehäusewandung 14 besitzt einen sich über einen Teil des Umfangs des Gasgenerators 16 erstreckenden und im wesentlichen an dessen Form angepaßten Hauptabschnitt 12', der insbesondere auch im Bereich der flaschenhalsartigen Verlängerung 11 des Gasgenerators 16 wenigsten annähernd dessen Außenkontur folgt.

Dieser teilzylindrische Hauptabschnitt 12' der Gehäusewandung 12 ist im Querschnitt teilkreisförmig, wobei der Gasgenerator 16 über einen Teil seines Umfangs umgriffen wird, der sich über weniger als den halben Umfang erstreckt.

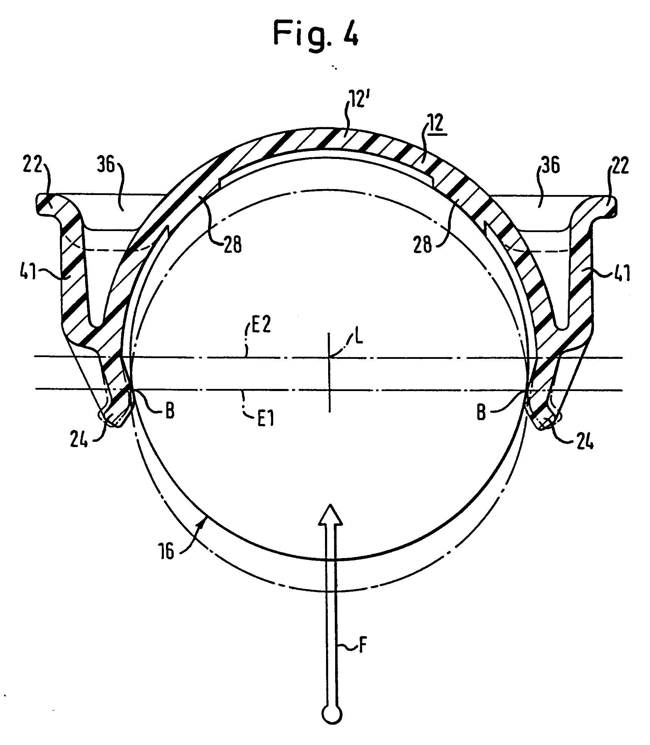

An den beiden einander gegenüberliegenden Rändern 13 des Hauptabschnitts 12' sind in dessen Verlängerung jeweils zwei der elastischen Klemmarme 24 vorgesehen. Diese vorzugsweise jeweils mit einer nach innen gerichteten Längsrippe 15 (Fig. 1) versehenen Klemmarme 24 umgreifen den Gasgenerator 16 so weit, daß die bei montiertem Gasgenerator 16 die Berührungspunkte B zwischen den Klemmarmen 24 und dem Gasgenerator 16 enthaltende Ebene E1 von der Gehäusewandung 12 aus betrachtet hinter einer dazu parallelen, die Längsachse L enthaltenden Ebene E2 liegt (Fig. 4). Dadurch wird der Gasgenerator 16 durch die im vorliegenden Ausführungsbeispiel vier Klemmarme 24 enthaltende elastische Klemmaufnahme gegen den teilzylindrischen Hauptabschnitt 12' der Gehäusewandung 12 gedrängt.

Beim dargestellten Ausführungsbeispiel stützt sich der Gasgenerator 16 an zur Längsachse L parallelen Längsrippen 28 ab, die auf der Generatorseite des Hauptabschnitts 12' der Gehäusewandung 12 ausgebildet sind (Fig. 1 und 4). Am vom Hauptabschnitt 12' abgewandten Ende sind die elastischen Klemmarme 24 wiederum nach außen gebogen (Fig. 4). Die Längsrippen 28 sind ebenso wie die elastischen Klemmarme 24 einstückig mit der aus Kunststoff bestehenden Gehäusewandung 12 ausgebildet.

In axialer Verlängerung des an die Form des Gasgenerators 16 angepaßten Hauptabschnitts 12' ist die Gehäusewandung 12 einstückig mit einer Gasanschlußkammer 30 ausgebildet, in die das Ende 34 des Gasgenerators 16 einsetzbar ist, das den die Gasaustrittsöffnungen 32 aufweisenden Endabschnitt 46 sowie den zwischen diesem Endabschnitt 46 und dem zylindrischen Ansatz 42 liegenden kegelstumpfartigen Zwischenbereich 48 umfaßt.

Die teilzylindrische, zur Längsachse L' der elastischen Aufnahme 24 (Fig. 1) bzw. zur damit zusammenfallenden Längsachse L des montierten Gasgenerators 16 koaxiale Anschlußkammer 30 ist zur Seite des Gassacks 14 hin offen. Sie mündet ferner in zwei zur Seite des Gassacks 14 hin ebenfalls offene Gasführungskanäle 36 (Fig. 1 und 4) der Gehäusewandung 12. Diese den Hauptabschnitt 12' der Gehäusewandung 12 zumindest teilweise umgebenden Gasführungskanäle 36 grenzen unmittelbar innen an den vom Wulst 20 des Gassacks 14 hintergriffenen äußeren Rand 22 der Gehäusewandung 12 an. Damit ist gewährleistet, daß die ovale Einblasöffnung 18 gleichmäßig vom Gasdruck beaufschlagt wird.

Ein unterer Wandabschnitt 19 der Gasanschlußkammer 30 ist bezüglich der Längsachse L' der elastischen Klemmaufnahme 24 geneigt und damit annähernd der Kontur des Endes 34 des Gasgenerators 16 angepaßt.

Die Gasanschlußkammer 30 besitzt zwei zueinander parallele, zur Längsachse L' senkrechte Stirnwände 37, 38, die jeweils mit einer zur Längsachse L' koaxialen Öffnung 43, 44 versehen sind. Die Öffnung 43 der axial innenliegenden größeren Stirnwand 37 umschließt mit ihrem Rand die flaschenhalsartige Verlängerung 11 des Gasgenerators 16, während der zylindrische Ansatz 42 des Gasgenerators 16 in die kleinere Öffnung 44 der kleineren, axial außenliegenden Stirnwand 38 eingreift.

Auf der Innenseite der axial äußeren Stirnwand 38 ist angrenzend an die Öffnung 44 eine ringförmige Aussparung 21 vorgesehen, in die eine im Querschnitt trapezförmige Ringdichtung 49 eingesetzt ist. Der Gasgenerator 16 liegt mit seinem kegelstumpfartigen, axial nach außen verjüngten Zwischenbereich 48 über diese Ringdichtung 49 an der Stirnwand 38 an. Demnach dient diese äußere Stirnwand 38 der Gasanschlußkammer 30 auch als axialer Anschlag für den Gasgenerator 16.

Am anderen Ende liegt der Gasgenerator 16 an einem weiteren axialen Anschlag 40 der Gehäusewandung 12 an, der durch einen stirnseitigen Abschnitt einer Umfangswand 41 (Fig. 1 und 4) gebildet ist, an der der vom Wulst 20 hintergriffene Rand 22 der Gehäusewandung 12 angeordnet ist und die sich zumindest im wesentlichen senkrecht zu der diesen Rand 22 enthaltenden Ebene erstreckt. Diese Umfangswand 41 begrenzt zusammen mit dem Hauptabschnitt 12' der Gehäusewandung 12 die diesen Hauptabschnitt 12' zumindest im wesentlichen umgebenden Gasführungskanäle 36.

Der Gasgenerator 16 ist somit zwischen den beiden Anschlägen 38, 40 axial festgelegt, wobei die Ringdichtung 49 bei in die Klemmaufnahme 24 eingeschnapptem und axial festgelegtem Gasgenerator 12 durch diesen in Axialrichtung vorzugsweise komprimiert wird. In Verbindung mit dem kegelstumpfartigen Zwischenbereich 48 des Gasgenerators 32 ergibt sich zudem eine Zentrierung des Gasaustrittsendes des Gasgenerators 16, nachdem dieser mit seinem zylindrischen Ansatz 42 in die Öffnung 44 eingesetzt ist und über den Zwischenbereich 48 gegen die Ringdichtung 49 gehalten wird.

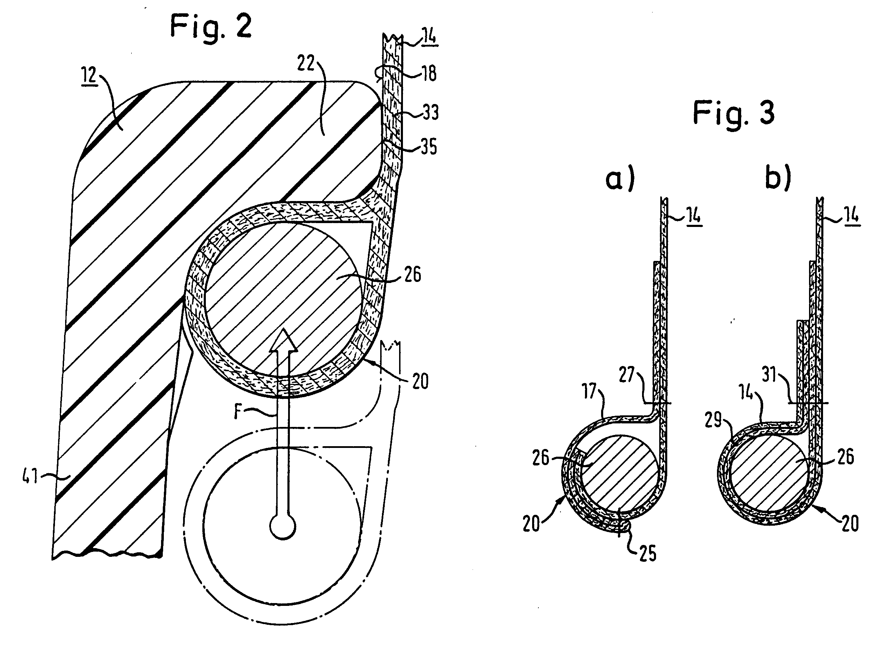

Beim vorliegenden Ausführungsbeispiel ist der Wulst 20 durch eine schlauchförmige Berandung der Einblasöffnung 18 des Gassacks 14 und einen in diese eingesetzten geschlossenen Verstärkungsring 26 gebildet (vgl. insbesondere die Fig. 2 und 3). Der Verstärkungsring 26 ist zweckmäßigerweise in den Saum der Berandung der Einblasöffnung 18 eingenäht. Hierzu können im Wulstbereich mehrere z.B. aus einem Gewebe bestehende Materiallagen übereinandergelegt sein.

Nach Fig. 3a ist der Rand des Gassacks 14 um etwas mehr als den halben Umfang des Verstärkungsrings 26 geschlagen. Eine weitere Materiallage 17 ist mit einem umgeschlagenen Ende über den um den Verstärkungsring 26 geschlagenen Rand des Gassacks 14 gelegt und an diesem umgeschlagenen Ende 25 mit dem Gassack 14 vernäht. Der restliche, nicht umgeschlagene Teil der weiteren Materiallage 17 ist über den restlichen Umfang des Verstärkungsrings 26 zur Innenwand des Gassacks 14 geführt und mit diesem beispielsweise an einer Stelle 27 vernäht.

In Fig. 3b ist eine alternative Art der Herstellung des Wulstes 20 gezeigt, bei der der Rand des Gassacks 14 vollständig um den Verstärkungsring 26 geschlagen und zwischen diesen Rand und den Verstärkungsring 26 eine weitere Materialschicht 29 eingesetzt ist, die ebenfalls vollständig um den Verstärkungsring 26 geschlagen ist, so daß an einer hinter dem Verstärkungsring 26 gelegenen Naht 31 vier Materiallagen übereinanderliegen und gleichzeitig vernäht sind.

Zur Montage des Gassackmoduls 10 wird zunächst der Dichtring 49 in die an der Stirnwand 38 der Gasanschlußkammer 30 vorgesehene Ausnehmung 21 eingelegt. Dann wird die Gehäusewandung 12 in die mit dem Wulst 20 versehene Einblasöffnung 18 des Gassacks 14 eingeführt. Anschließend wird die Gehäusewandung 12 so gedreht, daß der Wulst 20 des Gassacks 14 etwa parallel zu dem äußeren Rand 22 der Gehäusewandung 12 ist. Dann wird der Rand 22 in Anlage an den Wulst 20 gezogen, wobei der Wulst 20 über die schräg ansteigende Rippe 23 gezwängt wird und schließlich am äußeren Rand 22 der Gehäusewandung 12 einschnappt (vgl. z.B. Fig. 2). Die Montagerichtung ist in Fig. 2 durch einen Pfeil F angedeutet. Während der Wulst 20 eng an der dem Gasgenerator 16 zugewandten Seite des Randes 22 und der Außenfläche der Umfangswand 41 der Gehäusewandung 12 anliegt, ist der an ihn angrenzende Abschnitt 33 des Gassacks 14 dicht an die Umfangsfläche 35 des Randes 22 angelegt.

Anschließend wird der Gasgenerator 16 auf der dem Gassack 14 gegenüberliegenden Seite der Gehäusewandung 12 angebracht. Hierzu ist der zylindrische Ansatz 42 des Gasgenerators 16 in die in der Stirnwand 38 der Gasanschlußkammer 30 vorgesehene Öffnung 44 einzusetzen. Ferner ist der Gasgenerator 16 in Richtung des Pfeiles F in Fig. 4 soweit gegen den Hauptabschnitt 12' der Gehäusewandung 12 zu drücken, daß er in die durch die Klemmarme 24 gebildete elastische Klemmaufnahme einschnappt. Dabei werden die Klemmarme 24 zunächst etwas nach außen gedrückt, wobei sie zunächst die in Fig. 4 strichpunktiert dargestellte Lage einnehmen. Wird der Gasgenerator 16 weiter in Richtung des Hauptabschnitts 12' der Gehäusewandung 12 gedrückt, so schnappt er in die flexible

Klemmaufnahme ein, wodurch deren Klemmarme 24 wieder zurückfedern und den Gasgenerator 16 gegen die am Hauptabschnitt 12' der Gehäusewandung 12 vorgesehenen Längsrippen 28 drängen.

Nach Fig. 4 liegen die sich danach ergebenden Berührungspunkte B zwischen den Klemmarmen 24 und dem Gasgenerator 16 in einer Ebene E1, die unterhalb einer dazu parallelen, durch die Längsachse L verlaufenden Ebene E2 liegt.

Die Befestigung des Gasgenerators 16 an der Gehäusewandung 12 ist demnach durch die elastischen Klemmarme 24 gesichert. Durch diese Klemmarme 14 sowie den an dem kegelstumpfartigen Zwischenbereich 48 seines Endes 34 anliegenden Dichtring 49 wird der Gasgenerator 16 in Radialrichtung festgelegt. In Axialrichtung ist der Gasgenerator 16 durch die beiden Anschläge 38 und 40 festgelegt, die durch die axial äußere Stirnwand 38 der Gasanschlußkammer 30 bzw. die Umfangswand 41 definiert sind, die zur den Rand 22 enthaltenden Ebene zumindest im wesentlichen senkrecht ist. Indem das Ende 34 des zwischen die axialen Anschläge 38, 40 eingesetzten Gasgenerators 16 über den Dichtring 49 an der Stirnwand 38 abgestützt ist, wird dieser Dichtring 49 durch den Gasgenerator 16 komprimiert. Mit dem Einschnappen des Gasgenerators 16 in die durch die Klemmarme 24 gebildete flexible Klemmaufnahme ist somit gleichzeitig auch für eine nach außen dichte Verbindung des Gasaustrittsendes 34 des Gasgenerators 16 mit dem Innenraum des Gassacks 14 gesorgt.

Wird der Gasgenerator 16 im Falle einer Kollision gezündet, so strömt das aus den Gasaustrittsöffnungen 32 austretende Gas über die Gasanschlußkammer 30 und die in diese mündenden Gasführungskanäle 36 durch die Einblasöffnung 18 hindurch ins Innere des Gassacks 14, wodurch dieser in den Fahrgastraum des betreffenden Fahrzeugs hinein entfaltet wird. Die aufgrund des im Gassack 14 aufgebauten Innendrucks erzeugten Kräfte werden über die formschlüssige Verbindung im Bereich des den Rand 22 hintergreifenden Wulstes 20 von der im Fahrzeug montierten Gehäusewandung 12 aufgenommen.

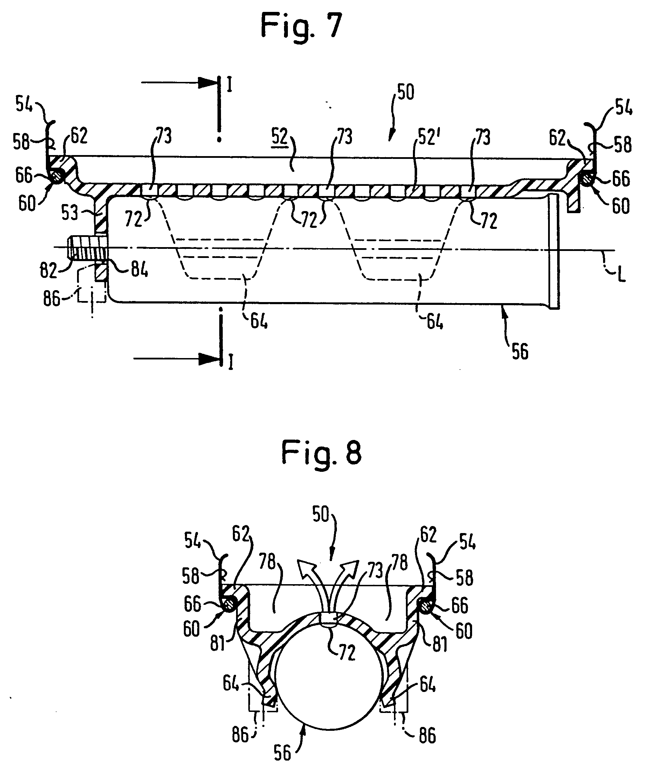

Die in den Figuren 7 und 8 gezeigte Ausführungsform eines Gassack-Moduls 50 ist insbesondere zur Verwendung in Verbindung mit einem Festtreibstoff-Gasgenerator verwendbar. Teilen der Ausführungsform gemaß den Figuren 1 bis 6 vergleichbare Teile sind mit um 40 erhöhten Bezugszeichen versehen.

Gemäß den Figuren 7 und 8 ist der Gasgenerator 56 durchgehend zylindrisch und ohne flaschenhalsartige Verlängerung ausgebildet. Im Mantel des zylindrischen Gasgenerators 56 sind mehrere Gasaustrittsöffnungen 72 vorgesehen, die in einer zur Längsachse L parallelen Reihe ausgerichtet und über die Länge des Gasgenerators 56 verteilt sind. Die Gehäusewandung 52 enthält eine entsprechende Anzahl von in der gleichen Weise angeordneten und ausgerichteten Gasdurchtrittsöffnungen 73, mit denen die Gasaustrittsöffnungen 72 des an der Gehäusewandung 52 montierten Gasgenerators 56 ausgerichtet sind.

Eine zum Hauptabschnitt 52' der Gehäusewandung 52 senkrechte Wand auf der dem Gasgenerator 56 zugewandten Seite dient als in Fig. 7 linker axialer Anschlag. In dieser Wand 53 ist eine Öffnung 84 ausgebildet, durch die hindurch sich ein koaxialer zylindrischer Ansatz 82 des an der Gehäusewandung 52 montierten Gasgenerators 56 nach außen erstreckt.

Der Gasgenerator 56 ist wiederum durch vier elastische Klemmarme 64 seitlich gegen den Hauptabschnitt 52' der Gehäusewandung 52 gehalten.

Der Gassack 54 ist entlang der die Einblasöffnung 58 umgebenden Berandung wiederum mit einem Wulst 60 versehen, der einen in die schlauchförmige Berandung eingesetzten geschlossenen Verstärkungsring 66 enthält und einen äußeren Rand 62 der Gehäusewandung 52 formschlüssig hintergreift. Der sich flanschartig nach außen erstreckende Rand 62 ist wiederum an einer äußeren Umfangswand 81 ausgebildet (Fig. 8), die zusammen mit dem zumindest teilweise an die Form des zylindrischen Gasgenerators 56 angepaßten Hauptabschnitt 52' der Gehäusewandung 52 zur Seite des Gassacks 54 hin offene Gasführungskanäle 78 begrenzt.

Der Hauptabschnitt 52' der Gehäusewandung 52 ist ohne Rippen ausgebildet, so daß der Gasgenerator 56 durch die elastischen Klemmarme 64 unmittelbar gegen die betreffende Seite des Hauptabschnitts 52' gehalten ist, wodurch eine gasdichte Verbindung zwischen den Gasaustrittsöffnungen 72 und dem Innern des Gassacks 54 durch die Gasdurchtrittsöffnungen 73 im Hauptabschnitt 52' hindurch sichergestellt ist.

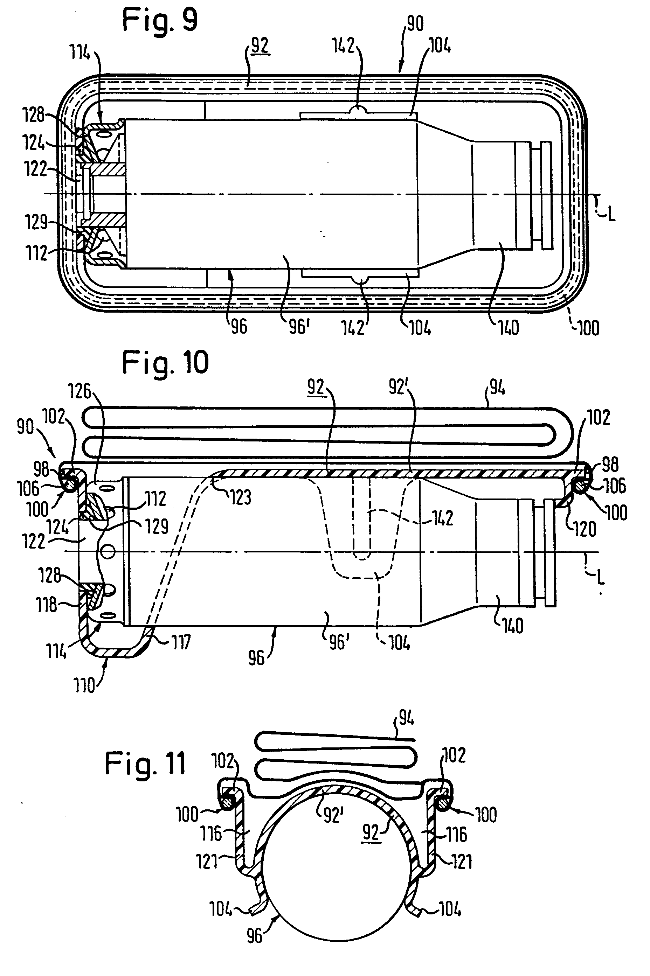

In den Figuren 9 bis 13 ist ein Ausführungsbeispiel eines Gassack-Moduls 90 gezeigt, das insbesondere in Verbindung mit einem Augment-Gasgenerator verwendbar ist. Die der Ausführungsform gemäß den Figuren 1 bis 6 entsprechenden Teile sind mit um 80 erhöhten Bezugszeichen versehen.

Der Gasgenerator 96 ist am einen Ende 114 mit einer Reihe von über seinen Umfang verteilten Gasaustrittsöffnungen 112 versehen. Dieses Ende 114 weist einen nur geringfügig kleineren Außendurchmesser als ein sich daran anschließender zylindrischer Hauptabschnitt 96' des Gasgenerators 96 auf.

Das Ende 114 des Gasgenerators 96 ist wiederum mit einem koaxialen zylindrischen Ansatz 122 versehen, der nach einer Montage des Gasgenerators 96 an der Gehäusewandung 92 in eine Öffnung 124 eingreift, die in einer axial äußeren Stirnwand 118 einer Gasanschlußkammer 110 ausgebildet ist. In die Öffnung 124 ist eine Ringdichtung 129 eingesetzt, die mit einem verbreiterten Kopf auf der Innenseite der als axialer Anschlag dienenden Stirnwand 118 der Gasanschlußkammer 110 anliegt und durch eine sich zwischen dem Ansatz 122 und dem Außenumfang des Hauptabschnitts 96' des Gasgenerators 96 erstreckende abgeschrägte Schulter 128 gegen die Stirnwand 118 gedrückt wird. Hierbei sitzt der sich mit einem Teil in die Öffnung 124 hineinerstreckende Dichtring 129 auf dem zentralen Ansatz 122, wobei sein verbreiterter Kopf im Bereich der durch die abgeschrägte Schulter 128 gebildeten Hinterschneidung angeordnet ist. Der Gasgenerator 96 wird durch einen am gegenüberliegenden Ende angreifenden axialen Anschlag 120 der Gehäusewandung 92 gegen die Stirnwand 118 gehalten, so daß der Dichtring 129 durch die abgeschrägte Schulter 128 komprimiert wird.

Die axial innenliegende Stirnwand 117 der Gasanschlußkammer 110 ist bezüglich der axial äußeren, zur Längsachse L senkrechten Stirnwand 118 geneigt. Nach Fig. 10 verläuft diese mit dem Hauptabschnitt 92' der Gehäusewandung 92 verbundene axial innere Stirnwand 117 schräg nach rechts oben. In dieser Stirnwand 92 der Gasanschlußkammer 110 ist eine weitere, im Vergleich zur Öffnung 124 größere Öffnung 123 vorgesehen, durch die sich der Gasgenerator 96 mit seinem mittleren zylindrischen Hauptabschnitt 96' hindurch erstreckt.

Das dem zylindrischen Ansatz 122 gegenüberliegende Ende 140 des Gasgenerators 46 ist flaschenhalsartig verjüngt. Der an diesem Ende angreifende, einstückig mit der Gehäusewandung 92 ausgebildete axiale Anschlag 120 erstreckt sich zunächst senkrecht zum Hauptabschnitt 92' der Gehäusewandung 92 nach unten und ist anschließend hakenförmig axial nach innen abgebogen.

Der Gasgenerator 96 ist wiederum durch flexible Klemmarme 104 seitlich gegen die Gehäusewandung 92 gehalten. Im vorliegenden Fall sind jedoch nur zwei derartige Klemmarme 104 vorgesehen, die etwa in der Mitte des Hauptabschnitts 92' der Gehäusewandung 92 auf zwei einander gegenüberliegenden Längsseiten des montierten Gasgenerators 96 angeordnet sind. Die Klemmarme 104 sind jeweils mit einer äußeren Verstärkungsrippe 142 versehen.

Der auf der gegenüberliegenden Seite der Gehäusewandung 92 im gefalteten Zustand verstaute Gassack 94 ist entlang seiner die Einblasöffnung 98 umgebenden Berandung wiederum mit einem Wulst 100 versehen, der einen flanschartig nach außen vorstehenden Rand 102 der Gehäusewandung 92 formschlüssig hintergreift und wiederum einen in die schlauchförmige Berandung eingesetzten Verstärkungsring 106 enthält.

Die zur Seite des Gassacks 94 hin offene Gasanschlußkammer 110 mündet in äußere Gasführungskanäle 116, die wiederum durch den teilzylindrischen, an die Form des Gasgenerators 96 angepaßten Hauptabschnitt 92' der Gehäusewandung 92 und die äußere, den Rand 102 aufweisende Umfangswand 121 begrenzt sind.

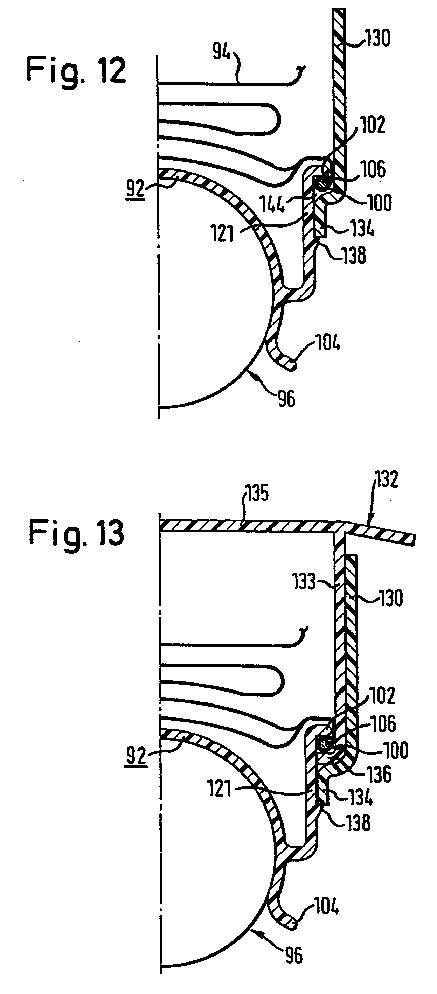

Nach Fig. 12 kann der Gehäusewandung 92 ein in Umfangsrichtung des Randes 102 umlaufender Gassack-Führungsrahmen 130 zugeordnet sein, durch den der Gassack 94 beim Entfalten geführt wird. Der Gassack-Führungsrahmen 130 hintergreift mit einem entsprechend nach innen und dann wiederum in Längsrichtung nach unten umgebogenen Ende 134 den Rand 102 der Gehäusewandung 92 sowie den den Verstärkungsring 106 enthaltenden Wulst 100. Hierbei ist der Gassack-Führungsrahmen 130 vorzugsweise von der Seite des Gasgenerators 96 her auf die den Rand 102 aufweisende Umfangswand 121 der Gehäusewandung 92 aufgeschoben und an seinem umgebogenen Ende 134 durch einen an dieser Umfangswand 121 vorgesehenen äußeren Rastvorsprung 138 in einer Stellung gesichert, in der der Wulst 100 formschlüssig in einem Ringraum 144 eingeschlossen ist, der durch den Rand 102 der Gehäusewandung 92, die sich daran anschließende, zur den Rand 102 enthaltenden Ebene senkrechte Umfangswand 121 sowie das umgebogene Ende 134 des Gassack-Führungsrahmens 130 begrenzt ist.

Der Gasgenerator 96 wird wiederum durch die flexiblen Klemmarme 104 an der Gehäusewandung 92 gehalten.

Nach Fig. 13 ist zusätzlich eine Sicht-Abdeckung 132 vorgesehen, die zumindest eine zum Gassack-Führungsrahmen 130 parallele Seitenwand 133 sowie eine dazu zumindest im wesentlichen senkrechte Außenwand 135 aufweist. Die Seitenwand 133 der vorzugsweise flexibel ausgebildeten Abdeckung ist am unteren Ende nach innen abgebogen und so zwischen den außenliegenden Gassack-Führungsrahmen 130 und die Umfangswand 121 der Gehäusewandung 92 eingesetzt, daß ihr umgebogenes Ende 136 sowohl den Rand 102 der Gehäusewandung 92 als auch den Wulst 100 des Gassacks 94 hintergreift und zwischen dem Rand 102 und dem umgebogenen Ende 134 des äußeren Gassack-Führungsrahmens 130 liegt, so daß über den Gassack-Führungsrahmen 130 gleichzeitig auch die Abdeckung 132 an der Gehäusewandung 92 festgelegt wird.

Die Abdeckung 132 wird vorzugsweise vor der Montage des Gassack-Führungsrahmens 130 von der Seite des Gassacks 94 her auf die mit dem Rand 102 versehene Umfangswand 121 der Gehäusewandung 92 aufgesetzt, was durch die zumindest teilweise flexible Ausbildung der Gehäusewandung 92 und/oder der Abdeckung 132 erleichtert wird.

Anschließend wird der Gassack-Führungsrahmen 130 von der anderen Seite her soweit über die Umfangswand 121 der Gehäusewandung 92 geschoben, bis er mit seinem abgebogenen Ende 134 unter Einschluß des abgebogenen Endes 136 der Abdeckung 132 und des Wulstes 100 durch den Rastvorsprung 138 am Rand 122 festgelegt ist. Der Gassack-Führungsrahmen 130 dient demnach gleichzeitig zur Abstützung und Befestigung der Abdeckung 132. Der Gasgenerator 96 ist wiederum durch die flexiblen Klemmarme 104 an der Gehäusewandung 92 festgelegt.

Ein solcher Gassack-Führungsrahmen und/oder eine solche Abdeckung können auch in Verbindung mit den restlichen Ausführungsvarianten eines Gassack-Moduls vorgesehen sein.

Im Ergebnis sind somit weder zur Anbringung des Gassacks an der Gehäusewandung noch zur Anbringung des Gasgenerators an der Gehäusewandung irgendwelche zusätzlichen Befestigungsmittel erforderlich. Durch die formschlüssigen Verbindungen ist ein gasdichter Abschluß gewährleistet. Der Zusammenbau und die Montage des Gassack-Moduls sind damit wesentlich vereinfacht. Entsprechend ist auch eine einfachere Demontage des Gassack-Moduls möglich. Die Anzahl der verschiedenen Bauteile ist auf ein Minimum herabgesetzt, wodurch auch das Gesamtgewicht verringert wird. Insbesondere aufgrund der ovalen Form der Einblasöffnung wird diese beim Füllen des Gassacks nur minimal belastet. Eine bleibende Verformung des Gehäuses nach einer Auslösung des Gasgenerators ist praktisch ausgeschlossen. Es stellt sich eine Art Fischmaul-Effekt ein, wodurch das Gehäuse nach einer Druckbeaufschlagung des Gassacks wieder seine ursprüngliche Form annimmt. Weitere Vorteile hinsichtlich der Montage und der Widerstandsfähigkeit ergeben sich aufgrund der bevorzugten Flexibilität der Gehäusewandung hinsichtlich der Befestigung im Fahrzeug und hinsichtlich des einströmenden Gases. Der Einbau im Fahrzeug ist weiter durch die äußerst kompakte Bauweise erleichtert. Ferner ist der Gassack-Modul in Verbindung mit praktisch jeder Art von Gassack verwendbar. Von Vorteil ist auch die auf äußerst einfache Weise und wiederum ohne zusätzliche Befestigungsmittel mögliche Erweiterung durch einen Gassack-Führungsrahmen und/oder eine Sicht-Abdeckung. Schließlich ist ein derartiger Gassack-Modul auf relativ einfache Weise kostengünstig herstellbar.

## Patentansprüche

1. Gassack-Modul eines Insassen-Rückhaltesystems für Fahrzeuge, mit einem auf einer Seite einer länglichen Gehäusewandung (12, 52, 92) verstaubaren Gassack (14, 54, 94) und einem auf der gegenüberliegenden Seite dieser Gehäusewandung (12, 52, 92) anbringbaren Gasgenerator (16, 56, 96) zum Aufblasen des Gassacks (14, 54, 94), wobei der Gassack (14, 54, 94) entlang einer eine Einblasöffnung (18, 58, 98) umgebenden Berandung mit einem Wulst (20, 60, 100) versehen ist, dadurch gekennzeichnet, daß die Gehäusewandung (12, 52, 92) einen von dem Wulst (20, 60, 100) des Gassacks (14, 54, 94) hintergriffenen Rand (22, 62, 102) aufweist und daß an der Gehäusewandung (12, 52, 92) eine elastische Klemmaufnahme (24, 64, 104) für den Gasgenerator (16, 56, 96) vorgesehen ist, in die dieser unter Herstellung einer dichten Verbindung mit dem Innern des Gassacks (14, 54, 94) einschnappbar ist.

2. Gassack-Modul nach Anspruch 1, **dadurch gekennzeichnet**, daß der Wulst (20, 60, 100) durch eine schlauchförmige Berandung der Einblasöffnung (18, 58, 98) des Gassacks (14, 54, 94) und einen in diese schlauchförmige Berandung eingenähten Verstärkungsring (26, 66, 106) gebildet ist.

3. Gassack-Modul nach einem der vorhergehenden Ansprüche, **dadurch gekennzeichnet**, daß der Gasgenerator (16, 56, 96) zumindest im wesentlichen zylindrisch ist und daß die Form der Gehäusewandung (12, 52, 92) zumindest teilweise an die Form des Gasgenerators (16, 56, 96) angepaßt ist.

4. Gassack-Modul nach einem der vorhergehenden Ansprüche, **dadurch gekennzeichnet**, daß die Klemmaufnahme wenigstens zwei elastische Klemmarme (24, 64, 104) enthält, die den Gasgenerator (16, 56, 96) auf einander gegenüberliegenden Längsseiten zumindest teilweise umgreifen.

5. Gassack-Modul nach einem der vorhergehenden Ansprüche, **dadurch gekennzeichnet**, daß die elastische Klemmaufnahme (24, 64, 104) einstückig mit der Gehäusewandung (12, 52, 92) ausgebildet ist.

6. Gassack-Modul nach einem der vorhergehenden Ansprüche, **dadurch gekennzeichnet**, daß die Gehäusewandung (12, 92) eine zur Seite des Gassacks (14, 94) hin offene Gasanschlußkammer (30, 110) aufweist, in die ein mit Gasaustrittsöffnungen (32, 112) versehenes Ende (34, 114) des montierten Gasgenerators (16, 96) eingesetzt ist.

7. Gassack-Modul nach Anspruch 6, **dadurch gekennzeichnet**, daß die Gasanschlußkammer (30, 110) in wenigstens einen zur Seite des Gassacks (14, 94) hin offenen Gasführungskanal (36, 116) der Gehäusewandung (12, 92) mündet, der im Bereich des vom Wulst (20, 100) hintergriffenen äußeren Randes (22, 102) der Gehäusewandung (12, 92) angeordnet ist und einen zumindest im wesentlichen der Form des Gasgenerators (16, 96) angepaßten Hauptabschnitt (12', 92') dieser Gehäusewandung (12, 92) wenigstens teilweise umgibt.

8. Gassack-Modul nach Anspruch 1, **dadurch gekennzeichnet**, daß ein koaxialer zylindrischer Ansatz (42, 122) des an der Gehäusewandung (12, 92) montierten Gasgenerators (16, 96) in eine in der äußeren Stirnwand (38, 118) vorgesehene Öffnung (44, 124) eingreift und daß der Gasgenerator (16, 96) zwischen dem Ansatz (42, 122) und einem die Gasaustrittsöffnungen (32, 112) aufweisenden Endabschnitt (46, 126) einen kegelstumpfartigen Zwischenbereich (48) oder eine abgeschrägte Schulter (128) aufweist, mit dem bzw. der er über einen Dichtring (49, 129) an der Stirnwand (38, 118) anliegt.

9. Gassack-Modul nach einem der vorhergehenden Ansprüche, **dadurch gekennzeichnet**, daß die im Mantel des zylindrischen Gasgenerators (56) vorgesehenen Gasaustrittsöffnungen (72) mit in der Gehäusewandung (52) entsprechend angeordneten Gasdurchtrittsöffnungen (73) ausgerichtet sind.

10. Gassack-Modul nach Anspruch 1, **dadurch gekennzeichnet**, daß der Wulst (20) in dichter Anlage an einem umlaufenden Sitz gehalten ist, der zwischen einem auswärts gerichteten Rand (22) der Gehäusewandung und einer auswärts abragenden Rippe (23) gebildet ist.

11. Gassack-Modul nach einem der vorhergehenden Ansprüche, **dadurch gekennzeichnet**, daß mit der Gehäusewandung (92) ein in Umfangsrichtung ihres Randes (102) umlaufender Gassack-Führungsrahmen (130) und/oder eine gassackseitige Abdeckung (132) verrastbar ist, der bzw. die mit einem entsprechend umgebogenen Ende (134, 136) den Rand (102) der Gehäusewandung (92) sowie den Wulst (100) hintergreift.

12. Gassack-Modul nach Anspruch 11, **dadurch gekennzeichnet**, daß der Gassack-Führungsrahmen (130) und/oder die Abdeckung (132) mit dem umgebogenen Ende (134, 136) auf eine Umfangswand (121) der Gehäusewandung (92) aufschiebbar und/oder aufschnappbar ist, die an den vom Wulst (100) hintergriffenen Rand (102) angrenzt und sich zumindest im wesentlichen senkrecht zu der diesen Rand (102) enthaltenden Ebene erstreckt.

13. Gassack-Modul nach Anspruch 12, **dadurch gekennzeichnet**, daß sowohl der Gassack-Führungsrahmen (130) als auch die Abdeckung (132) vorgesehen sind und daß die Abdeckung (132) zwischen den außenliegenden Gassack-Führungsrahmen (130) und die Umfangswand (121) der Gehäusewandung (92) eingesetzt ist.

## Claims

1. A gas bag module of a vehicle occupant restraint system, having a gas bag (14, 54, 94) stowable on one side of an elongate housing wall (12, 52, 92) and a gas generator (16, 56, 96) installable at the opposite side of said housing wall (12, 52, 92) and provided for inflating said gas bag (14, 54, 94), said gas bag (14, 54, 94) being provided with a bead (20, 60, 100) along a border of an inflation opening (18, 58, 98), **characterized in that** said housing wall (12, 52, 92) has a border (22, 62, 102) which is gripped behind by said bead (20, 60, 100) of said gas bag (14, 54, 94) and in that on said housing wall (12, 52, 92) a flexible clamping support (24, 64, 104) is provided for said gas generator (16, 56, 96), into which the latter is snap-mountable, thus producing a tight connection with the interior of said gas bag (14, 54, 94).

2. The gas bag module as set forth in claim 1, **characterized in that** said bead (20, 60, 100) is formed by a tubular border of the inflation opening (18, 58, 98) of said gas bag (14, 54, 94) and a reinforcement ring (26, 66, 106) sewn into this tubular border.

3. The gas bag module as set forth in any one of the preceding claims, **characterized in that** said gas generator (16, 56, 96) is at least substantially cylindrical and that the shape of said housing wall (12, 52, 92) at least in part matches the shape of said gas generator (16, 56, 96).

4. The gas bag module as set forth in any one of the preceding claims, **characterized in that** said clamping support comprises at least two resilient clamping arms (24, 64, 104) which clasp said gas generator (16, 56, 96) at least partly on opposite longitudinal sides.

5. The gas bag module as set forth in any one of the preceding claims, **characterized in that** said resilient clamping support (24, 64, 104) is formed integrally with said housing wall (12, 52, 92).

6. The gas bag module as set forth in any one of the preceding claims, **characterized in that** said housing wall (12, 92) has a gas connecting chamber (30, 110) open towards the side of said gas bag (14, 94), with an end (34, 114) of the mounted gas generator (16, 96) provided with gas outlet openings (32, 112) being inserted in said gas connecting chamber (30, 110).

7. The gas bag module as set forth in claim 6, **characterized in that** said gas connecting chamber (30, 110) discharges into at least one gas duct (36, 116) of said housing wall (12, 92), which is open towards the side of the gas bag (14, 94) and arranged in the region of said outer border (22, 102) of said housing wall (12, 92) gripped behind by the bead (20, 100) and which, at least partly, surrounds a main section (12', 92') of this housing wall (12, 92) at least substantially matching the shape of said gas generator (16, 96).

8. The gas bag module as set forth in claim 1, **characterized in that** a coaxial cylindrical projection (42, 122) of said gas generator (16, 96) fitted to said housing wall (12, 92) engages in an opening (44, 124) provided in said outer front wall (38, 118) and that said gas generator (16, 96) has a frustoconical intermediate region (48) or a slanted shoulder (128) between said projection (42, 122) and an end section (46, 126) having said gas outlet openings (32, 112), said frustoconical intermediate region (48) or slanted shoulder (128) of said gas generator (16, 96) being in contact with said front wall (38, 118) via a sealing ring (49, 129).

9. The gas bag module as set forth in any one of the preceding claims, **characterzed in that** said gas outlet openings (72) provided in the envelope of the cylindrical gas generator (56) are aligned with through openings (73) correspondingly arranged in said housing wall (52).

10. The gas bag module as set forth in claim 1, **characterized in that** said bead (20) is held in tight abutment on a peripheral seat which is formed between an outwardly directed border (22) of the housing wall and a rib (23) which protrudes outwardly.

11. The gas bag module as set forth in any one of the preceding claims, **characterized in that** a gas bag guiding frame (130) extending in the circumferential direction of the border (102) of the housing wall and/or a cover (132) on the gas bag side is latchable with said housing wall (92), said frame (130) or said cover (132) gripping behind said housing wall (92) and said bead (100) by a suitably bent-over end (134, 136).

12. The gas bag module as set forth in claim 11, **characterized in that** said gas bag guiding frame (130) and/or said cover (132) can be pushed and/or snap mounted on a peripheral wall (121) of said housing wall (92) by means of said bent-over end (134, 136), said peripheral wall bordering said border (102) gripped behind by said bead (100) and extending at least substantially perpendicularly to the plane containing said border (102).

13. The gas bag module as set forth in claim 12, **characterized in that** both said gas bag guiding frame (130) and said cover (132) are provided and that said cover (132) is inserted between said outer gas bag guiding frame (130) and said peripheral wall (121) of said housing wall (92).

## Revendications

1. Module à coussin gonflable d'un système de retenue de passagers pour véhicules automobiles, avec un coussin gonflable (14, 54, 94), comprimable sur un côté d'une paroi de boîtier (12, 52, 92) allongée et un générateur de gaz (16, 56, 96) à placer sur le côté opposé de cette paroi de boîtier (12, 52, 92), pour le gonflage du coussin gonflable (14, 54, 94), le coussin gonflable (14, 54, 94) étant pourve, le long d'une bordure entourant un orifice d'insufflation (18, 58, 98), d'un bourrelet (20, 60, 100), caractérisé en ce que la paroi de boîtier (12, 52, 92) présente un bord (22, 62, 102) derrière lequel passe le bourrelet (20, 60, 100) du coussin gonflable (14, 54, 94) et en ce que sur la paroi de boîtier (12, 52, 92), il est prévu un logement de serrage (24, 64, 104) élastique pour le générateur de gaz (16, 56, 96), dans lequel ce dernier peut être encliqueté, réalisant ainsi une liaison étanche avec l'intérieur du coussin gonflable (14, 54, 94).

2. Module à coussin gonflable selon la revendication 1, caractérisé en ce que le bourrelet (20, 60, 100) est formé par une bordure en forme de tuyau de l'orifice d'insufflation (18, 58, 98) du coussin gonflable (14, 54, 94) et par un anneau de renfort (26, 66, 106), cousin dans cette bordure en forme de tuyau.

3. Module à coussin gonflable selon l'une des revendications précédentes, caractérisé en ce que le générateur de gaz (16, 56, 96) est au moins sensiblement cylindrique et en ce que la forme de la paroi de boîtier (12, 52, 92) est adaptée au moins en partie à la forme du générateur de gaz (16, 56, 96).

4. Module à coussin gonflable selon l'une des revendications précédentes, caractérisé en ce que le logement de serrage comprend au moins deux bras de serrage (24, 64, 104) élastiques, qui entourent au moins partiellement le générateur de gaz (16, 56, 96) sur des côtés longitudinaux opposés l'un à l'autre.

5. Module à coussin gonflable selon l'une des revendications précédentes, caractérisé en ce que le logement de serrage (24, 64, 104) élastique est formé d'une seule pièce avec la paroi de boîtier (12, 52, 92).

6. Module à coussin gonflable selon l'une des revendications précédentes, caractérisé en ce que la paroi de boîtier (12, 92) présente une chambre de branchement de gaz (30, 110), ouverte vers le côté du coussin gonflable (14, 94), dans laquelle est insérée une extrémité (34, 114), pourvue d'orifices de sortie de gaz (32, 112), du générateur de gaz (16, 96) monté.

7. Module à coussin gonflable selon la revendication 6, caractérisé en ce que la chambre de branchement de gaz (30, 110) débouche dans au moins un canal de guidage de gaz (36, 116), ouvert vers le côté du coussin gonflable (14, 94) de la paroi de boîtier (12, 92), lequel est placé dans la zone du bord (22, 102) extérieur de la paroi de boîtier (12, 92), derrière lequel passe le bourrelet (20, 100) et entoure au moins partiellement une portion principale (12', 92'), au moins sensiblement adaptée à la forme du générateur de gaz (16, 96), de cette paroi de boîtier (12, 92).

8. Module à coussin gonflable selon la revendication 1 , caractérisé en ce qu'un embout (42, 122) cylindrique, coaxial, du générateur de gaz (16, 96), monté sur la paroi de boîtier (12, 92), s'engage dans une ouverture (44, 124), prévue dans la paroi frontale (38, 118) extérieure et en ce que le générateur de gaz (16, 96) présente, entre l'embout (42, 122) et une portion d'extrémité (46, 126), présentant les orifices de sortie de gaz (32, 112), une zone intermédiaire (48) tronconique ou un épaulement (128) chanfreiné, avec laquelle ou lequel il s'applique contre la paroi frontale (38, 118), par une bague d'étanchéité (49, 129).

9. Module à coussin gonflable selon l'une des revendications précédentes, caractérisé en ce que les orifices de sortie de gaz (72), prévus dans l'enveloppe du générateur de gaz (56) cylindrique, sont alignés avec des orifices de passage de gaz (73), placés en correspondance dans la paroi de boîtier (52).

10. Module à coussin gonflable selon la revendication 1, caractérisé en ce que le bourrelet (20) est maintenu tout contre un siège périphérique, qui est formé entre un bord (22), dirigé vers l'extérieur, de la paroi de boîtier et une nervure (23) faisant saillie vers l'extérieur.

11. Module à coussin gonflable selon l'une des revendications précédentes, caractérisé en ce qu'avec la paroi de boîtier (92) peut s'accrocher un cadre de guidage de coussin gonflable (130), s'étendant en continu dans la direction périphérique de son bord (102) et/ou une couverture (132) côté coussin gonflable, qui, par une extrémité (134, 136) repliée en conséquence, passe derrière le bord (102) de la paroi de boîtier (92) ainsi que derrière le bourrelet (100).

12. Module à coussin gonflable selon la revendication 11, caractérisé en ce que le cadre de guidage de coussin gonflable (130) et/ou la couverture (132) avec l'extrémité repliée (134, 136), peut être enfilé et/ou clipsé sur une paroi périphérique (121) de la paroi de boîtier (92), qui est adjacente au bord (102) derrière lequel passe le bourrelet (100) et qui s'étend au moins sensiblement perpendiculairement au plan contenant ce bord (102).

13. Module à coussin gonflable selon la revendication 12, caractérisé en ce que sont prévus le cadre de guidage de coussin gonflable (130) ainsi que la couverture (132) et en ce que la couverture (132) est insérée entre le cadre de guidage de coussin gonflable (130) situé à l'extérieur et la paroi périphérique (121) de la paroi de boîtier (92).
